# EUROPEAN PATENT SPECIFICATION

(11) **EP 3 093 053 B1**
(45) Date of publication and mention of the grant of the patent: **01.12.2021**
(21) Application number: 15167838.0
(22) Date of filing: 15.05.2015
(51) Int. Cl.: C02F 1/40, E03F 5/16, B01D 21/00, B65D 1/12, E03F 11/00

(54) **ONE-PIECE CLARIFIYING TANK**
EINSTÜCKIGES KLÄRBECKEN
CLARIFICATEUR D'UNE SEULE PIÈCE

(43) Date of publication of application: 16.11.2016
(73) Proprietor: Uponor Infra Oy, 01510 Vantaa (FI)
(72) Inventor: Tast, Niila, 15270 Hollola (FI)
(74) Representative: Papula Oy

(56) References cited:
- DE-U1-202009 001 934
- GB-A- 2 490 160

## Description

### BACKGROUND

Liquids are treated in different applications by different methods. One of the methods is skimming, where the liquid to be treated is arranged to a skimming tank or container so that the floating matter, such as oil, fat, grease and other particles and matter lighter than the liquid rise and remain on the surface of the liquid. The floating matter can be then removed from the surface of the tank while the liquid flows continuously under the surface. Skimming is used in various applications including industrial processes, waste water treatment and similar. The applications may be large or small in size.

Conventionally skimming is done with an additional t-pipe or a scum board. For example, when a t-pipe is used it must be installed afterwards. This means that a hole must be drilled to the container to which the t-pipe is installed. Then a sealing ring must be provided to the hole so that the t-pipe can be mounted to the container. Instead of the sealing ring the t-pipe may also be welded so that the connection is tight. The use of additional t-pipe involves additional parts and additional work. Typically the t-pipe is located in the upper half of the container so that it is clearly between the light-weight floating matter and heavy sinking matter.

The drawback of the conventional art is that there are additional work steps required for mounting a t-pipe or similar solution. It can be difficult and un-ergonomic to do the mounting work inside the tank. Furthermore, each added part is always potentially an additional possible cause for defects. Furthermore, the possibility to mount additional parts to the container limits the container design as the designer must maintain the mounting area reachable.

DE 202009001934 discloses a container with a scum board. GB 2490160 discloses a water treatment apparatus with first and second baffles.

### SUMMARY

An integrated scum board between two chambers is disclosed. In liquid treatment skimming is used for removing light-weight floating matter from the liquid. The integrated scum board is provided inside a liquid container so that the container and the integrated scum board are formed of a same piece. Thus, there is no need to install additional scum board inside the container. The container and scum board can be manufactures ,for example, by rotational molding, blow-molding or three-dimensional printing.

In an example, not forming part of the invention, it is shown a container for liquids made of one-piece comprising at least two chambers, wherein at least one of the chambers further comprises a liquid input a liquid output and a connecting opening passage chambers. A is arranged in a chamber and configured to prevent floating matter entering from said chamber to next chamber by extending below of the surface of the liquid. The surface level of the liquid is controlled by choosing the location of the liquid output. The scum board is extending below the surface level of the liquid thus preventing the floating matter to enter the liquid output. The scum board and container are made of one piece. In a further embodiment the container further comprises a top opening and a possible openable cover for the top opening.

In an embodiment the container is a septic tank. In a further embodiment the container is an industrial process tank.

A benefit of the embodiments mentioned above is that no additional working steps or parts are needed for implementing skimming function to a liquid container. This leads into cost savings when the container can be manufactured in one working step. Furthermore, as the container does not include any additional parts for providing skimming feature it is not prone to faults, for example, caused by a leaking sealing or welding. A further benefit of the invention is that there is no need for mounting additional parts inside the container. Thus, there is no need to provide access to a worker for mounting. This will allow designers to design containers so that they do not have a limitation of the access.

### BRIEF DESCRIPTION OF THE DRAWINGS

The accompanying drawings, which are included to provide a further understanding of the embodiments and constitute a part of this specification, illustrate embodiments and together with the description help to explain the principles of the embodiments. In the drawings:
**Fig.** 1 is a block diagram of an example not forming part of the invention,
**Fig. 2a** is a block diagram of an example
   embodiment,
**Fig. 2b** is a top view of an example similar to the example of fig. 2a, and
**Fig. 3** is a three-dimensional model of an embodiment similar to the examples of Fig. 2a and 2b.

### DETAILED DESCRIPTION

Reference will now be made in detail to the embodiments, examples of which are illustrated in the accompanying drawings.

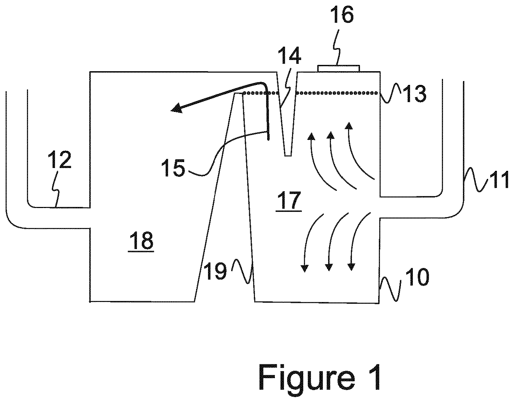

In figure 1 a container 10 with two chambers 17 and 18 for liquids is disclosed. The container 10 comprises an incoming pipe 11 and an outgoing pipe 12. Typically the pipes are not integral parts of the container 10. The container 10 includes means needed for attaching these pipes, for example, by having a threaded or other liquid tight connection. In order to improve the tightness the connection may be sealed. Many different connection types known to a person skilled in the art are suitable.

The location of the incoming connection may be selected on application basis depending, for example, on the properties of the light-weight and heavy matters that may be separated in the container 10 of figure 1 from the liquid. In figure 1 the outgoing pipe 12 is connected to a pump that is not shown in the figure, however, the pipe may be connected also so that the gravitation brings the liquid out from the second chamber 18.

When the liquid arrives at the first chamber 17 of the container 10 the light-weight material starts to rise to surface 13 of the liquid. The expression light-weight means herein matter that is lighter than the liquid so that it will float on the surface 13 of the liquid. When the container 10 is in continuous use the surface in the first chamber 17 will stay substantially at the same level 13 so that when more liquid is arriving at the container some liquid is forced to leave the first chamber 17 of the container 10 over the middle wall 19 as the arrow 15 shows.

The container 10 includes a scum board 14 that is formed of the same piece the body of the container 10. As the scum board 14 is an integral part of the container 10 there is no need to add additional parts inside the container 10. The container 10 and the scum board 14 may be manufactured, for example, by rotational molding, blow-molding or three-dimensional printing. The scum board 13 is formed together with the middle wall 19 so that it prevents most of the floating light-weight matter from entering from the first chamber 17 to the second chamber 18. The dimensions of the scum board 14 may be chosen on application basis. Typically the scum board is long enough so that it goes well below the surface of the liquid 13.

Correspondingly most of the matter that is heavier than the liquid will sink to the bottom of the first chamber 17 of container 10 and they will stay in the container 10 as the heavy matter cannot exit the first chamber 17 of container 10 and finally the container 10 by outgoing pipe 12. The container 10 may include a lid or cover 16 that can be opened so that floating light-weight matter and sinking heavy matter can be removed from the container 10, for example, once a day or once a year depending on the application. If the removal is done often the top of the container 10 may be left open. In figure 1 the cover 16 provides access only to the first chamber 17, however, it is possible provide an opening that provides access to more than one chamber or have separate openings for each of the chambers as discussed in below.

A person skilled in the art understands that typically the light-weight and heavy matter are not be removed completely by the process described above and some of the undesired matter will flow through the container so that further treatment may be required. The removal process can be improved, for example, by using several containers as disclosed above in series or by combining to different processes by providing more complete removal of undesired matter. However, the container as disclosed in figure 1 may be also be used without further components or processes. The container of figure 1 may be used in industrial processes, water treatment and similar applications where liquids comprising floating matter are processed. Furthermore, it is obvious to a person skilled in the art that as most of the undesired matter will stay in the container the container needs to be emptied and cleaned on a regular basis.

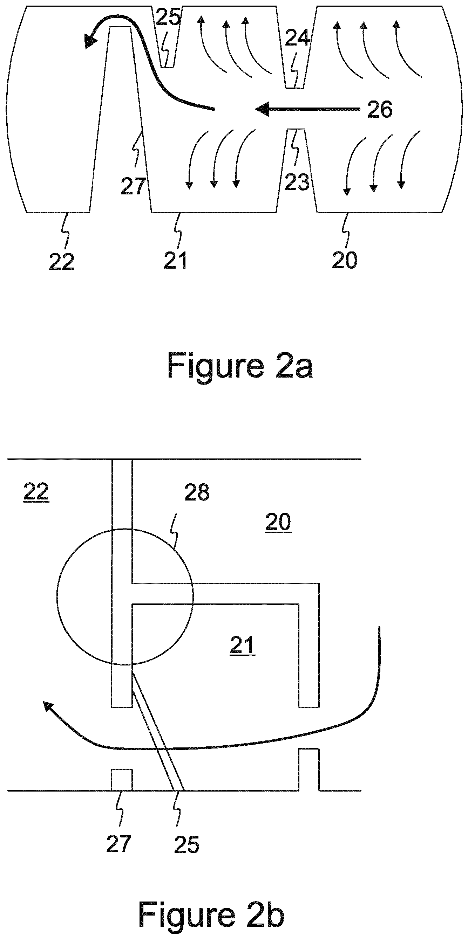

In figure 2a a block diagram of an embodiment is disclosed. The embodiment of figure 1 comprises a three chamber container for waste water treatment. Even if waste water treatment is a very typical application the embodiments may be used also in other processes. Typically waste water comprises floating and sinking particles that are separated from the water before further purification processes.

In the present embodiment three chambers 20, 21 and 22 are used, however, this is only example and any number of chambers may be used. Between the first 20 and second 22 chambers there is an opening through which the waste water moves from the first chamber 20 to the second chamber 21. The incoming waste water pipe to the first chamber 20 is not shown in the figure as it is considered obvious to a person skilled in the art that there must be an incoming pipe and arrangements relating to such pipes are well known. Some of the heavy matter sinks to the bottom of the first chamber 20 and some of the light-weight matter rises up to the surface that is not shown in the figure, however, a person skilled in the art understands that it follows the same principles as in the example of figure 1, where the surface stays essentially on the same level.

The opening is limited by partitioning walls 23 and 24 that are formed so that the opening is located so that the walls prevent some of the floating and sinking matter from entering to the second chamber 21 as described above. The waste water flows according to the arrow 26 in the figure.

Between the second chamber 21 and the third chamber 23 there is a scum board 25 that is an integral part of the three chamber container. Furthermore, there is also a partitioning wall 27 for keeping the heavy matter in the second chamber 11. The partitioning wall 27 acts as a middle wall between the second and third chamber and the scum board 25 is formed to operate together with the portioning wall 27. The second chamber 21 is arranged such that the light-weight matter rises to the top part according to arrows shown in the figure. The waste water level in the first chamber 20 and the second chamber 21 is the same and is regulated by the partitioning wall 27. When more waste water arrives at the first chamber 20 the waste water level will raise and some of the waste water will pass above the partitioning wall 26. From the third chamber 22 the waste water is pumped away for further treatment according to conventional methods. Thus, the waste water level may be and typically is different than in first 20 and second chamber 22.

The scum board 25 is arranged such that it keeps the light-weight floating matter in the second chamber 21. The three chamber container as disclosed in figure 2a is manufactured by rotational molding so that all features mentioned above are made of one piece so that no additional working steps are required after manufacturing the container in order to provide the skimming as disclosed above. The rotational molding is used here as an example, other manufacturing methods, such as three-dimensional printing, may be used for achieving a one-piece container having an integrated scum board 25.

In the example above a three chamber embodiment was disclosed, however, the number of chambers depends on the application. For example, it is possible to make an embodiment without the first chamber and/or the third chamber. For example, when the first chamber is missing the waste water is arriving at the second chamber. When the third chamber is missing the waste water may be released from the system to other arrangements or sometimes to the nature. In some applications more than three chambers are used for different reasons, however, in all embodiments at least one chamber with integrated scum board between two chambers is used.

Even if it is not shown in figure 2a the embodiment of figure 2a may include an opening similar to the cover 16 of figure 1 so that the floating light-weight matter and sinking heavy matter are removed from the waste water container. Each of the chambers may have their own openings or there may be one opening that provides access to all chambers.

Figure 2b shows a top view of an example according to figure 2a. In figure 2b a top opening 28 is shown. The opening 28 may be covered. In the example the top opening 28 is arranged such that each of the chambers 20 - 22 can be accessed from one opening. This is beneficial, for example, when the container is cleaned. The scum board 25 is formed in a manner that it will prevent the floating light-weight matter entering to the third chamber 22 through the opening between the chambers 21 and 22. In the example the partitioning wall 27 is formed such that it has only small opening that does not extend to the area of top opening 28. In the example the scum board has been formed accordingly. The scum board may come in different shapes even if the scum board of the example is a straight scum board extending from an outer wall of the container to the partitioning wall 27. For example, the scum board could be such that it is round and starts from the first side of the opening and extends to the second side of the opening such that it starts and ends from the partitioning wall.

In the example of figure 2b the top opening 28 is configured to provide an access to three different chambers, however, it is not necessary and separate openings may be used for each or some of the chambers. This may provide more freedom for determining the shape of the scum board 25.

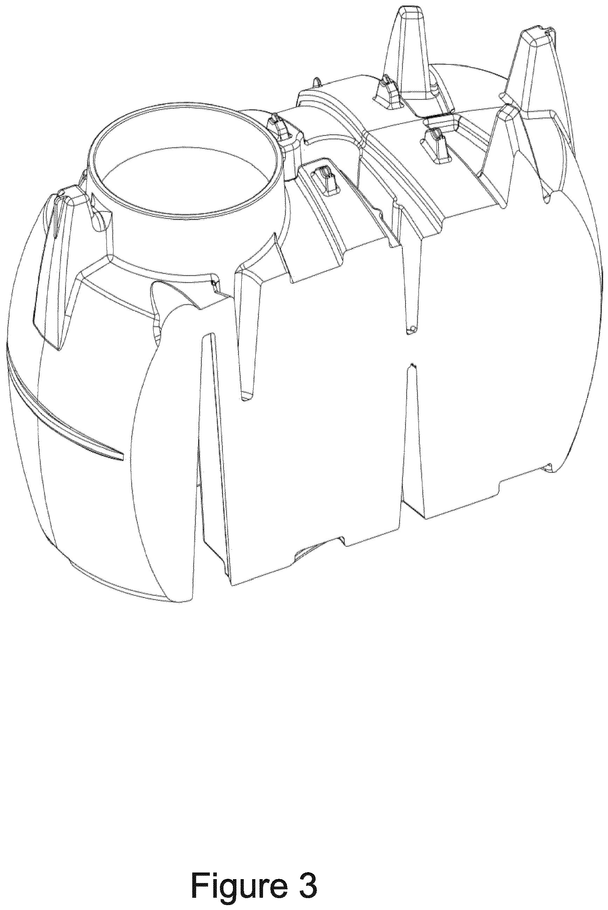

In figure 3 a three-dimensional model of an embodiment according to the block diagram of figures 2a and 2b is shown. The shapes discussed above with referral to figures 2a and 2b can be easily in the example.

It is obvious to a person skilled in the art that with the advancement of technology, the basic idea of the embodiments may be implemented in various ways. The embodiments are thus not limited to the examples described above; instead they may vary within the scope of the claims.

## Claims

1. A container for liquids comprising : a plurality of chambers (20, 21, 22);
a liquid input (11);
a liquid output (12); middle walls (23, 27) between the chambers, wherein the liquid is arranged to flow over the middle wall to the next chamber; and
a scum board (14, 25) wherein said scum board (14, 25) is configured to prevent floating matter entering from a chamber (17, 21) to a next (18, 22) chamber and said scum board (14, 25) is an integral part of the container, wherein the container is made of one piece and wherein the container and the scum board (14, 25) are formed of the same piece, so that no additional working steps are required after manufacturing the container;
**characterized in that** the container made comprises at least three chambers (20, 21, 22) in which
the liquid is arranged to move from the first chamber (20) to the second chamber (21) and from the second chamber to the third chamber (22), wherein the integrated scum board (14, 25) is arranged inside the second chamber by extending below of the surface of the liquid in the chamber and the scum board is arranged to keep the floating matter in the second chamber, wherein the middle walls are arranged to prevent most of the floating matter entering to the next chamber and to keep the floating matter in the chamber, and a partitioning wall (27) is used as the middle wall between the second and third chambers, and wherein
the scum board is arranged to operate together with the partitioning wall (27) for keeping the floating matter in the second chamber (21).

2. A container according to claim 1, wherein the partitioning wall (27) which is between the second (21) and third (22) chamber comprises an opening and the scum board (25) is configured to extend from a first side of the opening to a second side of the opening.

3. A container according to claim 1 or 2, wherein said container further comprises a top opening (16, 28).

4. A container according to claim 3, wherein the top opening (16, 28) is configured to provide access to each of the chambers and the scum board (14,25) is located outside the area of the top opening (16, 28).

5. A container according to any of preceding claims 1 - 4, wherein said container is a septic tank.

6. A container according to any of preceding claims 1 - 4, wherein said container is an industrial tank.

7. A container according to any of preceding claims 1 - 6, wherein said container is manufactured by rotational molding.

8. A container according to any of preceding claims 1 - 6, wherein said container is manufactured by blow-molding.

9. A container according to any of preceding claims 1 - 6, wherein said container is manufactured by three-dimensional printing.

## Patentansprüche

1. Behälter für Flüssigkeiten mit
einer Vielzahl von Kammern (20, 21, 22);
einem Flüssigkeitseinlass (11);
einem Flüssigkeitsausgang (12);
Mittelwände (23, 27) zwischen den Kammern, wobei die Flüssigkeit so angeordnet ist, dass sie über die Mittelwand in die nächste Kammer fließt;
und
ein Schaumbrett (14, 25), wobei das Schaumbrett (14, 25) so konfiguriert ist, dass es das Eindringen von Schwimmstoffen aus einer Kammer (17, 21) in eine nächste Kammer (18, 22) verhindert, und das Schaumbrett (14, 25) ein integraler Bestandteil des Behälters ist, wobei der Behälter aus einem Stück hergestellt ist und wobei der Behälter und das Schaumbrett (14, 25) aus demselben Stück gebildet sind, so dass nach der Herstellung des Behälters keine zusätzlichen Arbeitsschritte erforderlich sind,
**dadurch gekennzeichnet,**
**dass** der Behälter mindestens drei Kammern (20, 21, 22) aufweist in denen die Flüssigkeit so angeordnet ist, dass sie sich von der ersten Kammer (20) zur zweiten Kammer (21) und von der zweiten Kammer zur dritten Kammer (22) bewegt,
wobei das integrierte Schaumbrett (14, 25) innerhalb der zweiten Kammer angeordnet ist, indem es sich unterhalb der Oberfläche der Flüssigkeit in der Kammer erstreckt, und das Schaumbrett angeordnet ist, um die Schwimmstoffe in der zweiten Kammer zu halten,
wobei die Mittelwände so angeordnet sind, dass sie verhindern, dass der größte Teil der Schwimmstoffe in die nächste Kammer eindringt, und dass sie die Schwimmstoffe in der Kammer halten, und eine Trennwand (27) als Mittelwand zwischen der zweiten und dritten Kammer verwendet wird,
und wobei das Schaumbrett so angeordnet ist, dass es mit der Trennwand (27) zusammenwirkt, um die Schwimmstoffe in der zweiten Kammer (21) zu halten.

2. Behälter nach Anspruch 1, wobei die Trennwand (27), die sich zwischen der zweiten (21) und der dritten (22) Kammer befindet, eine Öffnung aufweist und das Schaumbrett (25) so gestaltet ist, dass es sich von einer ersten Seite der Öffnung zu einer zweiten Seite der Öffnung erstreckt.

3. Behälter nach Anspruch 1 oder 2, wobei der Behälter ferner eine obere Öffnung (16, 28) aufweist.

4. Behälter nach Anspruch 3, wobei die obere Öffnung (16, 28) so konfiguriert ist, dass sie Zugang zu jeder der Kammern bietet, und das Schaumbrett (14, 25) außerhalb des Bereichs der oberen Öffnung (16, 28) angeordnet ist.

5. Behälter nach einem der vorhergehenden Ansprüche 1 bis 4, wobei der Behälter eine Klärgrube ist.

6. Behälter nach einem der vorangehenden Ansprüche 1 bis 4, wobei der Behälter ein Industrietank ist.

7. Behälter nach einem der vorangehenden Ansprüche 1 bis 6, wobei der Behälter durch Rotationsgießen hergestellt ist.

8. Behälter nach einem der vorangehenden
Ansprüche 1 - 6, wobei der Behälter durch Blasformen hergestellt ist.

9. Behälter nach einem der vorangehenden Ansprüche 1 bis 6, wobei der Behälter durch dreidimensionales Drucken hergestellt ist.

## Revendications

1. Récipient pour liquides comprenant : une pluralité de chambres (20, 21, 22),
une entrée de liquide (11),
une sortie de liquide (12), des cloisons centrales (23, 27) entre les chambres, le liquide étant agencé pour s'écouler par-dessus la cloison centrale dans la chambre voisine, et
une plaque d'écumage (14, 25), ladite plaque d'écumage (14, 25) étant configurée pour empêcher le passage de matières flottantes d'une chambre (17, 21) à une chambre voisine (18, 22) et ladite plaque d'écumage (14, 25) faisant partie intégrante du récipient, le récipient étant réalisé en une seule pièce et le récipient et la plaque d'écumage (14, 25) étant réalisés en une même pièce de sorte qu'aucune autre étape de travail est nécessaire après la fabrication du récipient,
**caractérisé en ce que** le récipient comprend au moins trois chambres (20, 21, 22), dans lesquelles le liquide est agencé pour se déplacer de la première chambre (20) à la seconde chambre (21) et de la seconde chambre à la troisième chambre (22), la plaque d'écumage intégrée (14, 25) étant agencée à l'intérieur de la seconde chambre de manière à s'étendre dans la chambre, au-dessous de la surface du liquide, et la plaque d'écumage étant agencée pour retenir les matières flottantes dans la seconde chambre, les cloisons centrales étant agencées pour empêcher au maximum l'entrée de matières flottantes dans la chambre voisine et retenir les matières flottantes dans la chambre, et une cloison de séparation (27) étant utilisée comme cloison centrale entre la seconde et la troisième chambre, et la plaque d'écumage étant agencée pour fonctionner avec la cloison de séparation (27) pour retenir les matières flottantes dans la seconde chambre (21).

2. Récipient suivant la revendication 1, dans lequel la cloison de séparation (27), qui se situe entre la seconde chambre (21) et la troisième chambre (22), comprend une ouverture et la plaque d'écumage (25) étant configurée pour s'étendre d'un premier côté de l'ouverture à un second côté de l'ouverture.

3. Récipient suivant la revendication 1 ou 2, ledit récipient comprenant en plus une ouverture par le haut (16, 28).

4. Récipient suivant la revendication 3, dans lequel l'ouverture par le haut (16, 28) est configurée pour fournir un accès à chacune des chambres et la plaque d'écumage (14, 25) est située à l'extérieur de la zone de l'ouverture par le haut (16, 28).

5. Récipient suivant une des revendications précédentes 1 à 4, ledit récipient étant une fosse septique.

6. Récipient suivant une des revendications précédentes 1 à 4, ledit récipient étant une cuve industrielle.

7. Récipient suivant une des revendications précédentes 1 à 6, ledit récipient étant fabriqué par moulage par rotation.

8. Récipient suivant une des revendications précédentes 1 à 6, ledit récipient étant fabriqué par moulage par soufflage.

9. Récipient suivant une des revendications précédentes 1 à 6, ledit récipient étant fabriqué par impression en trois dimensions.
